# EUROPEAN PATENT APPLICATION

(11) **EP 2 632 106 A1**
(43) Date of publication of application: **28.08.2013**
(21) Application number: 13155621.9
(22) Date of filing: 18.02.2013
(51) Int. Cl.: H04L 29/06

(54) **Method for transmitting stream and electronic device for the method thereof**

(30) Priority: 23.02.2012 KR 20120018408
(71) Applicant: Samsung Electronics Co., Ltd, Gyeonggi-do 443-742 (KR)
(72) Inventor: Kim, Chang-Soon, Gyeonggi-do (KR); Choi, Jong-Mu, Gyeonggi-do (KR); Kim, Hak-Kwan, Gyeonggi-do (KR)
(74) Representative: Nederlandsch Octrooibureau

(57) **Abstract**

A technique for transmitting a stream between a first electronic device and a second electronic device is provided. A method includes determining whether a stream output from the first electronic device is an Internet stream, and transmitting Internet accessible information of the Internet stream to a second electronic device which communicates with the first electronic device using a short range communication scheme. The determining whether a stream output from the first electronic device is an Internet stream includes determining whether the stream decoded by the first electronic device and output through an output device of the first electronic device is the Internet stream.

## Description

### BACKGROUND OF THE INVENTION

### 1. Field of the Invention:

The present invention relates to a stream transmitting method and an electronic device for processing the method. More particularly, the present invention relates to a method for transmitting an Internet content stream between electronic devices which communicate with each other, and an electronic device for performing the method

### 2. Description of the Related Art:

Communication techniques between electronic devices are advancing in various ways. In particular, according to development of communication technologies relating to portable electronic devices and introduction of communication using wireless Internet or wired Internet, the communication between the portable electronic devices is utilized for many purposes.

Wi-Fi communication is a Wireless Local Area Network (WLAN) technology. WLAN provides a communication service such as Internet to portable terminals (e.g., Personal Digital Assistant (PDA), notebook computer, and the like) traveling within a certain distance from an installed Access Point (AP) which is a wireless access device. When WLAN technology was first adopted, WLAN had a propagation distance of approximately. However, development to WLAN technology expanded the propagation distance up to 50m - hundreds of meters. A transfer rate of the WLAN technology has also improved so as to enable transmission and reception of high-volume multimedia data.

The advance of the Wi-Fi communication comes to develop Wi-Fi Direct technique which allows print and content sharing through free communication between Wi-Fi devices without an AP or a router. The Wi-Fi Direct, which is also referred to as Wi-Fi Peer-to-Peer (P2P), can operate by grouping a P2P group owner and a P2P client.

The communication between the electronic devices includes, for example, Wi-Fi Display (WFD) communication. WFD communication is a technique for sharing, but not limited to, data including a video stream and/or an audio stream between the Wi-Fi electronic devices. For example, a WFD source electronic device transmits the video stream and/or the audio stream to a WFD sink electronic device. The two electronic devices share the streams, and the streams can be simultaneously output through a screen and/or a speaker. In the WFD communication, connectivity is achieved through, for example, Wi-Fi Direct.

Herein, the source device corresponds to a device transmitting the video stream and the audio stream, and the sink device corresponds to a device receiving the video stream and the audio stream.

The source device may be expressed as a source electronic device, and the sink device may be expressed as a sink electronic device. For example, the source device and the source electronic device, and the sink device and the sink electronic device are used together.

A standard of the WFD communication is described in Wi-Fi Display specification defined by Wi-Fi alliance.

The WFD communication for transmitting data from the WFD source electronic device to the WFD sink electronic device includes WFD device discovery, WFD connection setup, WFD capability negotiation, and WFD session establishment. In addition, the WFD communication may include a plurality of selective operations such as link content protection.

When the WFD session is established, a stream is transmitted from the WFD source electronic device to the WFD sink electronic device.

When the stream transmission from the source electronic device to the sink electronic device is completed, the WFD communication is finished through WFD session termination.

In the WFD communication, the WFD session establishment and the stream transmission from the WFD source electronic device to the WFD sink electronic device are now explained. The WFD source electronic device decodes an encoded stream which is stored therein or received from other medium such as Internet, and outputs the video stream through the screen and the audio stream through the speaker. Herein, the encoded stream indicates a compressed stream. For example, the video stream is compressed in the format of Moving Picture Expert Group (MPEG) of International Standard Organization (ISO)-International Electronical Commission (IEC) or H264 of or International Telecommunications Union (ITU)-Telecommunication standard sector (T), and the audio stream is compressed in the format of Linear Pulse Coded Modulation (LPCM) 44.1, LPCM 16-48, Advanced Audio Coding (AAC), AC-3, Authentication, Authorization, and Accounting (AAA), Adaptive Multi Rate (AMR), Windows Media Audio (WMA), MPEG-2 Audio, or MPEG-4 Audio.

The WFD source electronic device encodes the decoded output raw streams (e.g., video stream and audio stream), and transmits the encoded stream to the WFD sink electronic device. The WFD sink electronic device decodes the encoded stream received from the WFD source electronic device, and outputs the video stream through the screen and the audio stream through the speaker. Hence, the WFD source electronic device and the WFD sink electronic device share the video stream and the audio stream.

After the WFD source electronic device decodes the Internet stream received through another medium (or the stored Internet stream) and outputs the video stream through the screen and the audio stream through the speaker, the WFD source electronic device needs to re-encode the streams in order to transmit the output raw streams. However, when the decoded stream is encoded and transmitted, it is highly likely that display quality and/or sound quality are degraded. In addition, it takes some time to encode the stream. As for the video stream, the encoding time can matter.

Hence, in the WFD communication, when the WFD session is established and the stream is transmitted from the WFD source electronic device to the WFD sink electronic device, it is necessary to modify the method of the WFD source electronic device for decoding the encoded stream, outputting the decoded stream through the output device (the screen and/or the speaker), and re-encoding and transmitting the output stream.

Therefore, a need exists for an apparatus and a method for transmitting an Internet content stream between electronic devices which communicate with each other that improves an apparatus and a method of a first electronic device for decoding and outputting an Internet stream, encoding the decoded output Internet stream, and transmitting the encoded stream to a second electronic device.

The above information is presented as background information only to assist with an understanding of the present disclosure. No determination has been made, and no assertion is made, as to whether any of the above might be applicable as prior art with regard to the present invention.

### SUMMARY OF THE INVENTION

An object of the present invention is to address at least the above-mentioned problems and/or disadvantages and to provide at least the advantages described below. A further object of the present invention is to improve a method of a first electronic device for decoding and outputting an Internet stream, encoding the decoded output Internet stream, and transmitting the encoded stream to a second electronic device.

A further object of the present invention is to improve, according to quality of an Internet stream, a method of a first electronic device for decoding and outputting an Internet stream, encoding the decoded output Internet stream, and transmitting the encoded stream to a second electronic device.

A further object of the present invention is to provide a first electronic device which improves a method for decoding and outputting an Internet stream, encoding the decoded output Internet stream, and transmitting the encoded stream to a second electronic device.

A further object of the present invention is to provide a first electronic device improved according to Internet stream quality when decoding and outputting an Internet stream, encoding the decoded output Internet stream, and transmitting the encoded stream to a second electronic device.

A further object of the present invention is to provide a second electronic device corresponding to the improved electronic device, for receiving an Internet stream.

A further object of the present invention is to provide a second electronic device for receiving an Internet stream with respect to the improved transmission method.

According to a first aspect of the present invention at least one of these object is achieved by a method for transmitting a stream in a first electronic device. The method comprises determining whether a stream output from the first electronic device is an Internet stream, and transmitting Internet accessible information of the Internet stream to a second electronic device which communicates with the first electronic device with a short range communication scheme, wherein the determining whether a stream output from the first electronic device is an Internet stream includes determining whether the stream decoded by the first electronic device and output through an output device of the first electronic device is the Internet stream.

According to further aspect of the present invention at least one of these object is achieved by a method for transmitting a stream in a first electronic device. The method includes determining whether a stream output from the first electronic device is an Internet stream; determining a grade of the Internet stream, and when the grade of the Internet stream is a first grade, transmitting Internet accessible information of the Internet stream to a second electronic device which communicates with the first electronic device in a short distance, wherein the determining whether a stream output from the first electronic device is an Internet stream includes determining whether the stream decoded by the first electronic device and output through an output device of the first electronic device is the Internet stream.

According to further aspect of the present invention at least one of these object is achieved by a method for processing a stream in a second electronic device. The method includes notifying a first electronic device that the second electronic device is accessible to Internet, receiving Internet accessible information from the first electronic device, receiving an Internet stream over an Internet network using the Internet accessible information, and outputting the received Internet stream through an output device.

According to a further aspect of the present invention at least one of these object is achieved by, a first electronic device. The device comprises one or more processors, a memory, and one or more modules stored to the memory to be executed by the one or more processors. The one or more processors are arranged to determine whether a stream output from the first electronic device is an Internet stream; and transmitting Internet accessible information of the Internet stream to a second electronic device which communicates with the first electronic device with a short range communication scheme, wherein the determining whether a stream output from the first electronic device is an Internet stream includes determining whether the stream decoded by the first electronic device and output through an output device of the first electronic device is the Internet stream.

According to a further aspect of the present invention the one of these object is achieved by, a first electronic device. The device comprises one or more processors, a memory, and one or more modules stored to the memory to be executed by the one or more processors. The one or more processors are arranged to determine whether a stream output from the first electronic device is an Internet stream, to determine a grade of the Internet stream, and when the grade of the Internet stream is a first grade, to transmit Internet accessible information of the Internet stream to a second electronic device which communicates with the first electronic device in a short distance, wherein the determining whether a stream output from the first electronic device is an Internet stream includes determining whether the stream decoded by the first electronic device and output through an output device of the first electronic device is the Internet stream.

According to a further aspect of the present invention at least one of these object is achieved by a second electronic device. The device comprises one or more processors, a memory, and one or more modules stored to the memory to be executed by the one or more processors. The one or more processors are further arranged to notify a first electronic device that the second electronic device is accessible to Internet, to receive Internet accessible information from the first electronic device, to receive an Internet stream over an Internet network using the Internet accessible information, and to output the received Internet stream through an output device.

According to a further aspect of the present invention at least one of these object is achieved by, a first electronic device. The device comprises a means for determining whether a stream output from the first electronic device is an Internet stream, and a means for transmitting Internet accessible information of the Internet stream to a second electronic device which communicates with the first electronic device in a short distance, wherein the means for determining whether a stream output from the first electronic device is an Internet stream determines whether the stream decoded by the first electronic device and output through an output device of the first electronic device is the Internet stream.

According to a further aspect of the present invention at least one of these object is achieved by a first electronic device. The device comprises a means for determining whether a stream output from the first electronic device is an Internet stream, a means for determining a grade of the Internet stream, and a means for, when the grade of the Internet stream is a first grade, transmitting Internet accessible information of the Internet stream to a second electronic device which communicates with the first electronic device in a short distance, wherein the means for determining whether a stream output from the first electronic device is an Internet stream determines whether the stream decoded by the first electronic device and output through an output device of the first electronic device is the Internet stream.

According to a further aspect of the present invention at least one of these object is achieved by a second electronic device. The device comprises a means for notifying a first electronic device that the second electronic device is accessible to Internet, a means for receiving Internet accessible information from the first electronic device, a means for receiving an Internet stream over an Internet network using the Internet accessible information, and a means for outputting the received Internet stream through an output device.

Further advantageous embodiments of the invention are defined in the dependent claims.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1A is a block diagram illustrating when a video signal and an audio signal are transmitted from a Wi-Fi Display (WFD) source electronic device to a WFD sink electronic device in a WFD communication according to an exemplary embodiment of the present invention;

FIG. 1B is a block diagram illustrating when a video signal is transmitted from a WFD source electronic device to a WFD sink electronic device in a WFD communication according to an exemplary embodiment of the present invention;

FIG. 1C is a block diagram illustrating when a video signal is transmitted from a WFD source electronic device to a primary WFD sink electronic device and an audio signal is transmitted to a secondary WFD sink electronic device in a WFD communication according to an exemplary embodiment of the present invention;

FIG. 2 is a block diagram of a WFD source electronic device such as, for example, the WFD source electronic device of FIG. 1 according to an exemplary embodiment of the present invention;

FIG. 3 is a block diagram of a processor unit such as, for example, the processor unit of FIG. 2 according to an exemplary embodiment of the present invention;

FIG. 4 is a flowchart of WFD communication session establishment for transmitting a stream from a WFD source electronic device to a WFD sink electronic device according to an exemplary embodiment of the present invention;

FIG. 5A is a flowchart of WFD communication session establishment for transmitting Internet accessible information from a source electronic device to a sink electronic device according to an exemplary embodiment of the present invention;

FIG. 5B is a block diagram of an apparatus, which corresponds to a method such as, for example, the method of the flowchart of FIG. 5A, for establishing the WFD communication session for transmitting Internet accessible information from a source electronic device to a sink electronic device according to an exemplary embodiment of the present invention;

FIG. 6A is a flowchart of WFD communication session establishment for transmitting Internet accessible information from a source electronic device to a sink electronic device according to an exemplary embodiment of the present invention;

FIG. 6B is a block diagram of an apparatus, which corresponds to a method such as, for example, the method of the flowchart of FIG. 6A, for establishing a WFD communication session for transmitting Internet accessible information from a source electronic device to a sink electronic device according to an exemplary embodiment of the present invention;

FIG. 7A is a flowchart of WFD communication session establishment for transmitting Internet accessible information from a source electronic device to a sink electronic device according to an exemplary embodiment of the present invention;

FIG. 7B is a block diagram of an apparatus, which corresponds to a method such as, for example, the method of the flowchart of FIG. 7A, for establishing a WFD communication session for transmitting Internet accessible information from a source electronic device to a sink electronic device according to an exemplary embodiment of the present invention;

FIG. 8A is a flowchart of WFD communication session establishment for transmitting a Internet accessible information from a source electronic device to a sink electronic device according to an exemplary embodiment of the present invention; and

FIG. 8B is a block diagram of an apparatus, which corresponds to a method such as, for example, the method of the flowchart of FIG. 5A, for establishing a WFD communication session for transmitting Internet accessible information from a source electronic device to a sink electronic device according to an exemplary embodiment of the present invention.

Throughout the drawings, like reference numerals will be understood to refer to like parts, components and structures.

### DETAILED DESCRIPTION OF THE INVENTION

The following description with reference to the accompanying drawings is provided to assist in a comprehensive understanding of exemplary embodiments of the invention as defined by the claims and their equivalent. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention relate to a method for transmitting an Internet content stream between electronic devices which communicate with each other according to a short range communication scheme, and an electronic device for performing the method.

The short range communication scheme includes a Wi-Fi Display scheme, a Blue Tooth communication scheme, a Near Field Communication or a Wireless Local Area Network (LAN). Other short range communication schemes may also be used.

Hereunder, a Wi-Fi Display scheme which is an example of a short range communication scheme is used for explanation but the present invention is not limited to the Wi-Fi Display scheme.

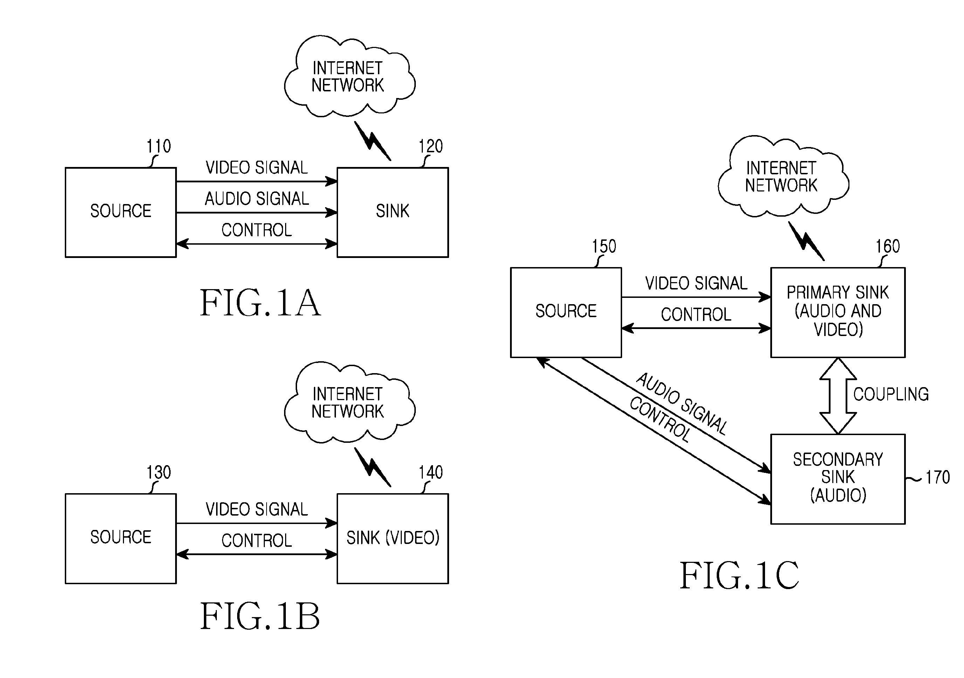

FIG. 1A is a block diagram illustrating when a video signal and an audio signal are transmitted from a Wi-Fi Display (WFD) source electronic device to a WFD sink electronic device in a WFD communication according to an exemplary embodiment of the present invention. FIG. 1B is a block diagram illustrating when a video signal is transmitted from a WFD source electronic device to a WFD sink electronic device in a WFD communication according to an exemplary embodiment of the present invention. FIG. 1C is a block diagram illustrating when a video signal is transmitted from a WFD source electronic device to a primary WFD sink electronic device and an audio signal is transmitted to a secondary WFD sink electronic device in a WFD communication according to an exemplary embodiment of the present invention.

For example, FIG. 1A depicts that an audio signal (e.g., a stream) and a video signal (e.g., a stream) are transmitted from a Wi-Fi Display (WFD) source electronic device (hereafter, referred to as a source device for brevity) to a WFD sink electronic device (hereafter, referred to as a sink device for brevity) in a WFD communication according to an exemplary embodiment of the present invention. A control signal is exchanged between the source electronic device and the sink electronic device if necessary. For example, the control signal is sent from the source electronic device to the sink electronic device so as to control the sink device to play, stop, or pause the video and/or audio signal.

The WFD communication for transmitting data from the WFD source electronic device to the WFD sink electronic device includes WFD device discovery, WFD connection setup, WFD capability negotiation, and WFD session establishment. In addition, the WFD communication may selectively execute link content protection.

Referring to FIG. 1A, the source electronic device 110 determines whether its output stream is an internet stream, and transmits Internet accessible information of the Internet stream to the sink electronic device 120 which Wi-Fi communicates with the source electronic device 110.

The source electronic device 110 determines a grade of its output Internet stream, and transmits Internet accessible information of the Internet stream to the sink electronic device 120 when the grade of its output Internet stream is a certain grade.

The sink electronic device 120 notifies its Internet accessibility to the source electronic device 110, receives the Internet accessible information from the source electronic device 110, receives the Internet stream over the Internet network using the received Internet accessible information, and processes the Internet stream to output the received Internet stream through an output device. Herein, the Internet accessible information may include, for example, Internet Uniform Resource Locator (URL). The Internet URL includes a protocol name required to access resources in the Internet, a domain name for identifying a particular computer in the Internet, and a path name hierarchically indicating a computer file location.

The source electronic device 110 decodes an Internet encoding stream received through other medium or its stored Internet encoding stream, and outputs the decoded Internet stream through the output device.

Referring to FIGs. 1A, 1B, and 1C, the encoding converts the type or form of the information into other type or form for standardization, security, processing rate enhancement, or storage space saving. For example, the video signal and/or the audio signal is/are compressed according to a certain format. For example, the video signal may be compressed in a format such as MPEG-4, H264, and the like, and the audio signal may be compressed in a format such as LPCM44.1, LPCM16-48, AAC, AC-3, AAA, AMR, WMA, MPEG-2 Audio, MPEG-4 Audio, and the like.

The decoding converts the encoded information back to the original information. Mostly, the decoding is the reverse process of the encoding. The decoding, for example, decompresses the encoded audio and/or video signals and outputs raw signals. The video raw signal indicates, for example, Luminance, Blue-Y, Red-Y (YUV) or Red, Green, Blue (RGB) signal.

FIG. 1B depicts that the video signal is transmitted from a source electronic device 130 to a sink electronic device 140 in the WFD communication according to an exemplary embodiment of the present invention. Herein, the control signal function has been explained in FIG. 1A.

The source electronic device 130 determines whether its output video signal is an Internet stream, and transmits Internet accessible information of the Internet stream to the sink electronic device 140 which Wi-Fi communicates with the source electronic device 130.

The source electronic device 130 determines the grade of its output Internet stream, and transmits the Internet accessible information of the Internet stream to the sink electronic device 140 when the grade of its output Internet stream is a certain grade.

The sink electronic device 140 notifies its Internet accessibility to the source electronic device 130, receives the Internet accessible information from the source electronic device 130, receives the Internet video signal over the Internet network using the received Internet accessible information, and processes the Internet stream to output the received Internet stream through an output device.

The source electronic device 130 decodes an Internet encoding stream received through other medium or its stored Internet encoding stream, and outputs the decoded Internet stream through the output device.

FIG. 1C depicts that the video signal is transmitted from a source electronic device 150 to a primary sink electronic device 160 and the audio signal is transmitted to a secondary sink electronic device 170 in the WFD communication according to an exemplary embodiment of the present invention. Herein, the control signal function has been explained in FIG. 1A. The session establishment in the WFD communication as described in FIG. 1A is applied between the source electronic device and the primary sink electronic device and between the source electronic device and the secondary sink electronic device in FIG. 1C. In this case, the primary sink electronic device and the secondary sink electronic device are coupled.

In the WFD communication of FIG. 1C, the source electronic device 150 transmits the video signal and the audio signal separately to the sink electronic devices 160 and 170. The source electronic device 150 determines whether its output video signal is an Internet stream, and transmits Internet accessible information of the Internet stream to the sink electronic devices 160 and 170 which Wi-Fi communicate with the source electronic device 150.

The source electronic device 150 determines the grade of its output Internet stream, and transmits the Internet accessible information of the Internet stream to the sink electronic devices 160 and 170 when the grade of its output Internet stream is a certain grade.

The sink electronic devices 160 and 170 notify their Internet accessibility to the source electronic device 150, receive the Internet accessible information from the source electronic device 150, receive their video signal and audio signal individually over the Internet network using the received Internet accessible information, and process the received Internet stream to output the Internet stream through an output device.

The source electronic device 150 decodes an Internet encoding stream received through other medium or its stored Internet encoding stream, and outputs the decoded Internet stream through the output device.

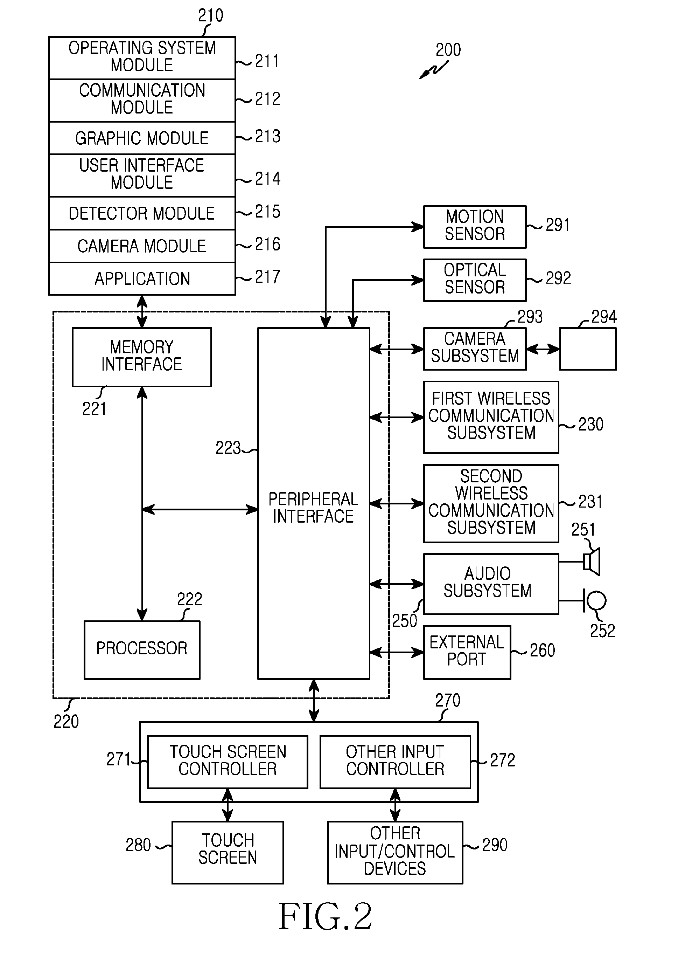

FIG. 2 is a block diagram of a WFD source electronic device such as, for example, the WFD source electronic device of FIG. 1 according to an exemplary embodiment of the present invention. The source electronic device 200 may be a portable electronic device or a device such as portable terminal, mobile phone, mobile pad, media player, tablet computer, handheld computer, or Personal Digital Assistant (PDA). The source electronic device 200 may be a portable electronic device combining two or more functions of those devices.

Referring to FIG. 2, the source device 200 includes a memory 210, a processor unit 220, a first wireless communication subsystem 230, a second wireless communication subsystem 231, an audio subsystem 250, a speaker 251, a microphone 252, an external port 260, an Input/Output (I/O) system 270, a touch screen 280, and other input or control devices 290. According to exemplary embodiments of the present invention, the source device 200 may be equipped with a plurality of memories 210 and a plurality of external ports 260.

The processor unit 220 may include a memory interface 221, one or more processors 222, and a peripheral interface 223. In some cases, the whole processor unit 220 may be referred to as a processor. The memory interface 221, the one or more processors 222, and/or the peripheral interface 223 may be separately provided or integrated on one or more integrated circuits. The processor 222 performs various functions for the electronic device 200 by running various software programs, and processes and controls voice communication and data communication. In addition to such typical functions, the processor 222 also executes a particular software module (e.g., an instruction set) stored to the memory 210 and performs various particular functions corresponding to the module. For example, the processor 222 carries out the method according to an exemplary embodiment of the present invention in association with software modules stored to the memory 210. For example, the source electronic device 110 determines whether its output signal is the Internet stream, and transmits the Internet accessible information of the Internet stream to the sink electronic device 120 which Wi-Fi communicates with the source electronic device 110. The source electronic device 110 determines the grade of its output Internet stream, and transmits the Internet accessible information of the Internet stream to the sink electronic device 120 when the grade of its output Internet stream is a certain grade. The sink electronic device 120 notifies its Internet accessibility to the source electronic device 110, receives the Internet accessible information from the source electronic device 110, receives the Internet stream over the Internet network using the received Internet accessible information, and processes the Internet stream to output the received Internet stream through the output device. The source electronic device 110 decodes the Internet encoding stream received through other medium or its stored Internet encoding stream, and outputs the decoded Internet stream through the output device. In addition, exemplary embodiments of the present invention provide various methods to be explained.

The processor 222 may include one or more data processors, an image processor, a detector, and the like. The data processor, the image processor, or the detector may be separately provided. Alternatively, a plurality of processors for performing different functions may be provided. The peripheral interface 223 connects the I/O subsystem 270 of the electronic device and various peripherals to the processor 221 and the memory 210 (e.g., through a memory interface).

The various components of the source electronic device 200 may be coupled using one or more communication buses or one or more stream lines, which are given no reference numerals.

The external port 260 is used to connect the electronic device 200 to other electronic device directly or indirectly via a network (e.g., Internet, intranet, and wireless LAN). The external port 260 may correspond to, for example, but not limited to, Universal Serial Bus (USB) port or a FireWire port.

According to exemplary embodiments of the present invention, a motion sensor 291 and a first optical sensor 292 may be coupled to the peripheral interface 223 to allow various functions. For example, the motion sensor 291 and the first optical sensor 292 are coupled to the peripheral interface 223 to detect motion of the electronic devices and the light from the outside. In addition, a positioning system and other sensors such as temperature sensor or bionic sensor may be coupled to the peripheral interface 223 to perform their functions.

According to exemplary embodiments of the present invention, a camera subsystem 293 may be coupled to a second optical sensor 294 to perform camera functions such as photo and video clip recording.

The first optical sensor 292 and the second optical sensor 294 may employ a Charged Coupled Device (CCD) or a Complementary Metal-Oxide Semiconductor (CMOS) device.

The communication function is conducted through the one or more wireless communication subsystems 230 and 231. The wireless communication subsystems 230 and 231 may include radio frequency receiver and transmitter and/or optical (e.g., infrared light) receiver and transmitter. The first wireless communication subsystem 230 and the second wireless communication subsystem 231 may be distinguished based on the communication network of the electronic device 200. For example, the communication network may include a communication subsystem designed to operate over, but not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDM) network, a Wi-Fi network, a WiMax network, a Bluetooth network, and the like. However, because exemplary embodiments of the present invention require the Wi-Fi communication over the Wi-Fi network, one of the first wireless communication subsystem 230 and the second wireless communication subsystem 231 may operate over the Wi-Fi network in FIG. 2. As an example, the first wireless communication subsystem 230 and the second wireless communication subsystem 231 may be united into a single wireless communication subsystem.

The audio subsystem 250 may be coupled to a speaker 251 and a microphone 252 to process the I/O of the audio signal such as voice recognition, voice reproduction, digital recording, telephone function, and the like. For example, the audio subsystem 250 communicates with a user through the speaker 251 and the microphone 252. The audio subsystem 250 receives the data signal through the peripheral interface 223 of the processor unit 220 and converts the received data stream to an electric signal. The converted electric signal is fed to the speaker 251. The speaker 251 converts the electric signal to a sound wave audible by the user and outputs the sound wave. The microphone 252 converts sound waves from the user or other sound sources to electric signals. The audio subsystem 250 receives the electric signal from the microphone 252. The audio subsystem 250 converts the received electric signal to the audio data signal and sends the converted audio data signal to the peripheral interface 223. The audio subsystem 250 may include an attachable and detachable ear phone, head phone, or head set.

The I/O subsystem 270 may include a touch screen controller 271 and/or another input controller 272. The touch screen controller 271 may be coupled to the touch screen 280. The touch screen 280 and the touch screen controller 271 may detect the contact and the motion using, but not limited to, capacitive, resistive, infrared and surface sound wave techniques for determining one or more contact points with the touch screen 280 and a multi-touch detection technique including various proximity sensors or other elements. The other input controller 272 may be coupled to the other input/control devices 290. The other input/control devices 290 may include one or more buttons. The buttons may include up/down buttons for controlling the volume of the speaker 251 and the microphone 252. The button may employ a push button or a rocker button. The other input/control devices 290 may employ a rocker switch, a thumb wheel, a dial, a stick, a pointer such as stylus, and the like.

The touch screen 280 provides the I/O interface between the electronic device 200 and the user. For example, the touch screen 280 forwards the user's touch input to the electronic device 200. The touch screen 280 also functions as a medium for showing the output of the electronic device 200 to the user. For example, the touch screen 280 shows the visual output to the user. The visual output is represented as text, graphic, video, and a combination of them.

Herein, the source electronic device 200 decodes and outputs the encoded video signal through a screen. The screen may employ a touch screen for processing the touch input.

The touch screen 280 may employ various displays, for example, but not limited to, Liquid Crystal Display (LCD), Light Emitting Diode (LED), Light emitting Polymer Display (LPD), Organic Light Emitting Diode (OLED), Active Matrix OLED (AMOLED), Flexible LED (FLED), and the like.

The memory 210 may be coupled to the memory interface 221. The memory 210 may include fast random access memory such as one or more magnetic disc storage devices and/or non-volatile memory, one or more optical storage devices, and/or a flash memory (e.g., NAND and NOR). The memory 210 may be non-transitory computer-readable memory.

According to exemplary embodiments of the present invention, the memory 210 stores software. Software components include an operating system module 211, a communication module 212, a graphic module 213, a user interface module 214, a detector module 215, a camera module 216, and one or more application modules 217. The modules being the software components may be represented as a set of instructions, and thus the module may be referred to as an instruction set. Also, the module may be referred to as a program.

One or more modules including the instructions for performing the various methods of the present invention may be stored to the memory 210.

The operating system software 211 (the embedded operating system such as WINDOWS, LINUX, Darwin, RTXC, UNIX, OS X, or VxWorks) includes various software components for controlling general system operations. The general system control indicates, for example, memory management and control, storage hardware (device) control and management, and power control and management. The operating system software 211 processes the normal communication between various hardware devices and the software components modules. The communication module 212 allows communication with other electronic devices such as computer, server, and/or portable terminal, through the wireless communication subsystems 230 and 231 or the external port 260. The graphic module 213 includes various software components for providing and displaying graphics on the touch screen 280. The term 'graphics' includes text, webpage, icon, digital image, video, animation, and the like. The user interface module 214 includes various software components relating to a user interface. The user interface module 214 is involved in the status change of the user interface and the condition of the user interface status change. The detector (e.g., CODEC) module 215 may determine whether the output signal of the electronic device 200 is the Internet stream. The camera module 216 includes camera related software components of camera related processes and functions. The application module 217 includes a browser, an e-mail, an instant message, a word processing, keyboard emulation, an address book, a touch list, a widget, Digital Right Management (DRM), voice recognition, voice reproduction, a position determining function, a location based service, and the like. The memory 210 may include an additional module (instructions) in addition to those modules. Alternatively, if necessary, part of the modules (instructions) may not be used.

The various functions of the electronic device 200 as stated above and to be explained, can be executed hardware and/or software and/or their combination including one or more signal processing and/or Application Specific Integrated Circuits (ASICs).

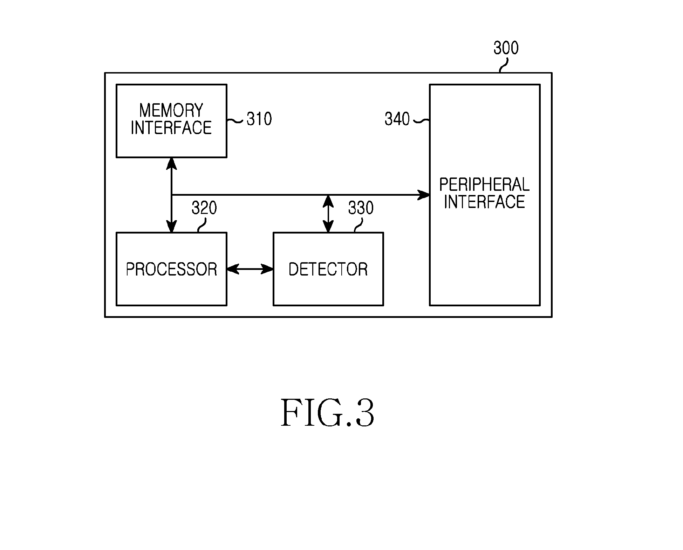

FIG. 3 is a block diagram of a processor such as, for example, the processor unit of FIG. 2 according to an exemplary embodiment of the present invention.

Referring to FIG. 3, the processor unit 300 includes a memory interface 310, a peripheral interface 340, a processor 320, and a detector 330. Herein, the detector 330 corresponds to the hardware functioning as the detector module stored to the memory 210 of FIG. 2. The processor 320 executes the method according to an exemplary embodiment of the present invention in association with the detector 330 and the software modules stored to the memory 210. According to an exemplary embodiment of the present invention, the processor 320 and the detector 330 together carry out various methods of the present invention. For example, the detector 330 of FIG. 3 is another processor.

FIGs. 2 and 3 may also correspond to block diagrams of the WFD sink electronic device of FIG. 1 according to an exemplary embodiment of the present invention.

According to exemplary embodiments of the present invention, the memory of the sink electronic device may include a module, which is the software component, for receiving the Internet accessible information from the source electronic device and processing the Internet stream by accessing the Internet network using the received information. The software module may include instructions for notifying the Internet accessibility of the sink electronic device to the source electronic device, receiving the Internet accessible information from the source electronic device, receiving the Internet stream over the Internet network using the received Internet accessible information, and outputting the received Internet stream through the output device. The received Internet accessible information may be the Internet URL.

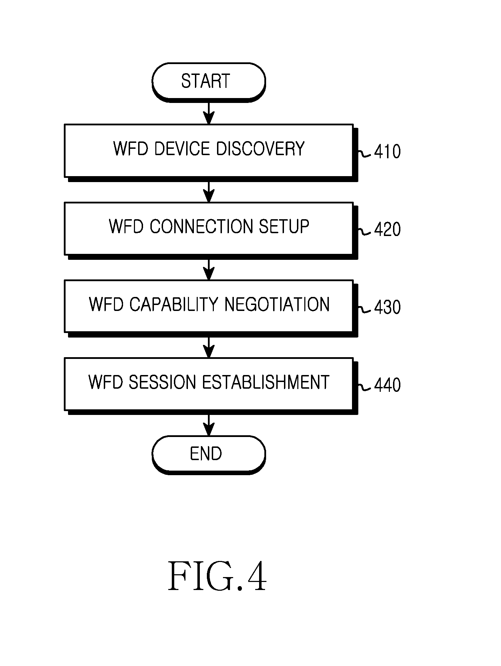

FIG. 4 is a flowchart of WFD communication session establishment for transmitting a stream from a WFD source electronic device to a WFD sink electronic device according to an exemplary embodiment of the present invention.

Referring to FIG. 4, to commence WFD communication, WFD device discovery, WFD connection setup, WFD capability negotiation, and WFD session establishment are performed. In addition, the link content protection (not shown) may be selectively conducted. After the WFD session is established, signals may be transmitted between the WFD devices (e.g., the source electronic device and the sink electronic device).

In step 410, WFD device discovery is performed. In the WFD device discovery, the source electronic device and the sink electronic device determine the mutual presence. In step 420, WFD connection is performed. The WFD connection setup determines which method uses the WFD connection. For example, the WFD connection setup determines to use the Wi-Fi direction for the WFD connection. In step 430, WFD capability negotiation is performed. The WFD capability negotiation 430 determines the sequence of the message exchange between a Real Time Streaming Protocol (RTSP) source device and a RTSP sink device. The RSTP message exchange sequence is determined in order to determine parameters defining the video/audio signals transmitted from the source electronic device to the sink electronic device. In this step, the sink electronic device notifies the Internet accessibility to the source electronic device. For example, when determining the sequence of the message exchange between the source electronic device and the sink electronic device and the parameters of the transmitted video/audio signals, the sink electronic device may transmit the Internet accessibility to the source electronic device. In step 440, WFD session establishment is performed. The WFD session establishment establishes the session between the source device and the sink device. When the session is established, the source device may transmit its selected signal to the sink device. The signals are transmitted between the source electronic device and the sink electronic device according to the present method. In addition, a plurality of optional steps such as link content protection for security of the content transmitted from the source device to the sink device may be conducted in necessary steps. The link content protection may configure a High-bandwidth Digital Content Protection (HDCP) 2.0 session key in the content.

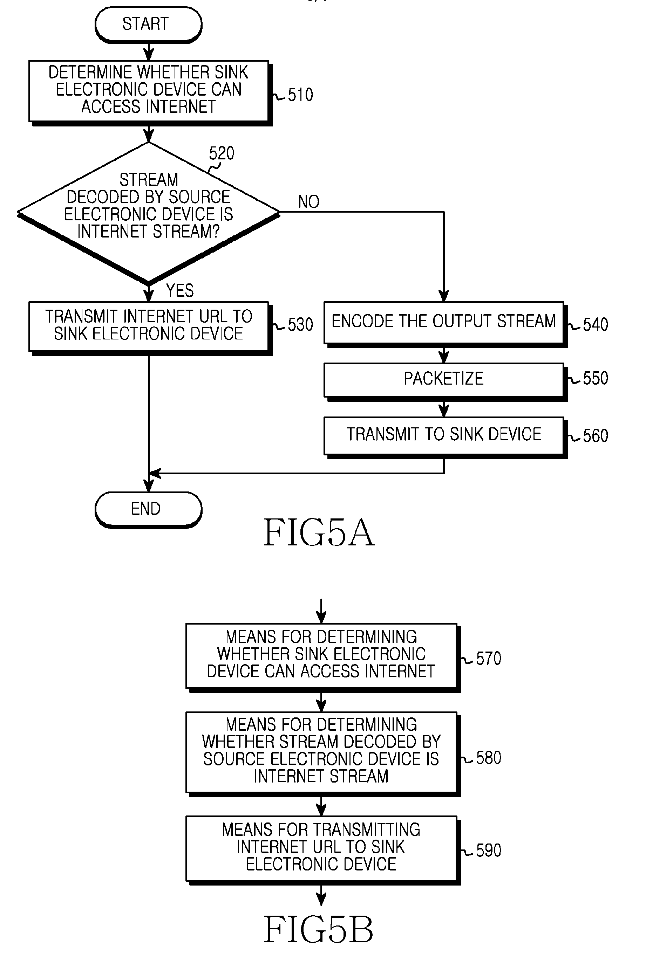

FIG. 5A is a flowchart of a WFD communication session establishment for transmitting Internet accessible information from a source electronic device to a sink electronic device according to an exemplary embodiment of the present invention.

Referring to FIG. 5A, the source electronic device determines whether the sink electronic device may access the Internet in step 510. Determining whether the sink electronic device may access the Internet identifies the Internet accessible information transmitted by the sink electronic device.

Prior to the operation for determining whether the sink electronic device may access the Internet, the sink electronic device may transmit the Internet accessibility information to the source electronic device, which is not illustrated in the drawing. The Internet accessibility information may be carried by the control signal. Alternatively, the Internet accessibility information may be carried by the packet header. Alternatively, when the source electronic device and the sink electronic device arrange in advance, the Internet accessibility information may be included in a particular location of the packet payload.

Before the sink electronic device transmits the Internet accessibility information to the source electronic device, the source electronic device may send a request inquiring of the Internet accessibility of the sink electronic device, to the sink electronic device, which is not illustrated in the drawing.

This operation of the source electronic device and the sink electronic device may be performed in, for example, step 430 of FIG. 4 in which the WFD capability negotiation is performed.

In step 520, it is determined whether the signal output from the source electronic device is the Internet stream. Herein, it is determined whether the signal decoded by the source electronic device and output through the output device of the source electronic device is the Internet stream. The source electronic device receives the Internet stream by accessing the Internet, decodes and outputs the received Internet stream encoded. When the signal is received over the Internet and output, the source electronic device already knows that the output signal is the Internet stream. Besides, the Internet stream may be identified by determining whether the signal includes the Internet URL. The Internet URL may be placed in the packet header of the signal. Alternatively, the Internet URL may be placed in the packet payload. Alternatively, it is possible to determine whether the signal is a content received through the communication according to Internet Protocol (IP).

When the signal output from the source electronic device is not the Internet stream, the source device encodes the output signal in step 540, packetizes the signal in conformity with the communication standard of the source electronic device and the sink electronic device in step 550, and transmits the signal to the sink electronic device in step 560.

When the signal output from the source electronic device is determined to be the Internet stream in step 510, the source electronic device transmits the Internet accessible information of the output Internet stream to the sink device which communicates with the source electronic device in step 430. In detail, the source device transmits the Internet URL of the output Internet stream to the sink device in step 530. The Internet URL, which is the Internet accessible information, may be carried by the control signal to the sink electronic device. The Internet URL includes the protocol name required to access the resource in the Internet, the domain name for identifying a particular computer in the Internet, and the path name hierarchically indicating the computer file location.

According to exemplary embodiments of the present invention, instruction sets for the respective operations of FIG. 5A may be stored as one or more modules to the memory 210 of FIG. 2. In this case, the module stored to the memory 210 may be executed by one or more processors.

FIG. 5B is a block diagram of an apparatus, which corresponds to a method such as, for example, the method of the flowchart of FIG. 5A, for establishing the WFD communication session for transmitting Internet accessible information from a source electronic device to a sink electronic device according to an exemplary embodiment of the present invention.

Referring to FIG. 5B, the source electronic device may include a means 570 for determining whether the sink electronic device is accessible to the Internet. Next, the source electronic device may include a means 580 for determining whether the signal output from the source electronic device is the Internet stream. In addition, the source electronic device may include a means (not shown) for sending the request inquiring of the Internet accessibility of the sink electronic device, to the sink electronic device. The source electronic device may include a means (not shown) for receiving the information of the Internet accessibility from the sink electronic device. The Internet accessibility information may be delivered by the control signal. Alternatively, the Internet accessibility information may be carried by the packet header. Alternatively, when the source electronic device and the sink electronic device arrange in advance, the Internet accessibility information may be included in a particular location of the packet payload.

Next, when the signal output from the source electronic device is the Internet stream, the source electronic device may include a means 590 for transmitting the Internet accessible information of the output Internet stream to the sink device which Wi-Fi communicates with the source electronic device. In particular, the Internet URL of the output Internet stream may be transmitted to the sink device. The URL, which is the Internet accessible information, may be carried by the control signal to the sink electronic device.

Such means may be implemented using separate or single hardware.

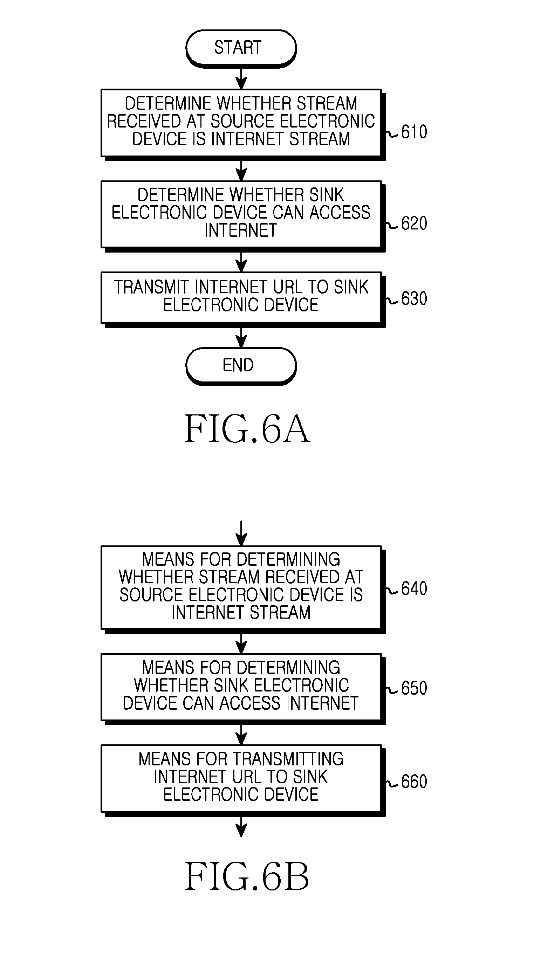

FIG. 6A is a flowchart of WFD communication session establishment for transmitting Internet accessible information from a source electronic device to a sink electronic device according to an exemplary embodiment of the present invention.

Referring to FIG. 6, first, it is determined whether the signal received at the source electronic device is the Internet stream in step 610. Herein, it is determined whether the signal decoded by the source electronic device and output through the output device of the source electronic device is the Internet stream. The source electronic device may receive and output the Internet stream by accessing the Internet network. Alternatively, the source electronic device may fetch and output the stored Internet stream, which may be included in this step. When the signal is received and output over the Internet, the received signal being the Internet stream is known already. The Internet stream may be identified by determining whether the signal includes the Internet URL. The Internet URL may be placed in the packet header of the signal. Alternatively, the Internet URL may be placed in the packet payload. Alternatively, it is possible to determine whether the signal is the content received through the communication according to the IP.

Next, the source electronic device determines whether the sink electronic device is accessible to the Internet in step 620. Determining whether the source electronic device may access the Internet identifies the information transmitted by the sink electronic device.

Prior to the determining operation, the sink electronic device may transmit its Internet accessibility information to the source electronic device, which is not illustrated in the drawing. The Internet accessibility information may be carried by the control signal. Alternatively, the Internet accessibility information may be carried by the packet header. Alternatively, when the source electronic device and the sink electronic device arrange in advance, the Internet accessibility information may be included in a particular location of the packet payload.

Before the sink electronic device transmits the Internet accessibility information to the source electronic device, the source electronic device may send the request inquiring of the Internet accessibility of the sink electronic device, to the sink electronic device, which is not illustrated in the drawing. This operation of the source electronic device and the sink electronic device may be fulfilled in step 430 of FIG. 4 in which the WFD capability negotiation is performed.

Next, the source electronic device transmits the Internet accessible information of its output Internet stream to the sink device which Wi-Fi communicates with the source electronic device. In particular, the Internet URL of the output Internet stream is transmitted to the sink device in step 630. The URL, which is the Internet accessible information, may be carried by the control signal to the sink electronic device.

According to exemplary embodiments of the present invention, instruction sets for the respective operations of FIG. 6A may be stored as one or more modules to the memory 210 of FIG. 2. In this case, the module stored to the memory 210 may be executed by one or more processors.

FIG. 6B is a block diagram of an apparatus, which corresponds to a method such as, for example, the method of the flowchart of FIG. 6A, for establishing a WFD communication session for transmitting Internet accessible information from a source electronic device to a sink electronic device according to an exemplary embodiment of the present invention.

Referring to FIG. 6B, the source electronic device may include a means 640 for determining whether the signal received at the sink electronic device is the Internet stream. Next, the source electronic device may include a means 650 for determining whether the sink electronic device is accessible to the Internet. In addition, the source electronic device may include a means (not shown) for sending the request inquiring of the Internet accessibility of the sink electronic device, to the sink electronic device. The source electronic device may include a means (not shown) for receiving the information of the Internet accessibility from the sink electronic device. The Internet accessibility information may be delivered by the control signal. Alternatively, the Internet accessibility information may be carried by the packet header. Alternatively, when the source electronic device and the sink electronic device arrange in advance, the Internet accessibility information may be included in a particular location of the packet payload.

Next, the source electronic device may include a means 660 for transmitting the Internet accessible information of the Internet stream output from the source electronic device, to the sink device which Wi-Fi communicates with the source electronic device. In particular, the means 660 transmits the Internet URL of the output internet stream to the sink device. The URL being the Internet accessible information may be delivered by the control signal to the sink electronic device.

Such means may be implemented using separate or single hardware.

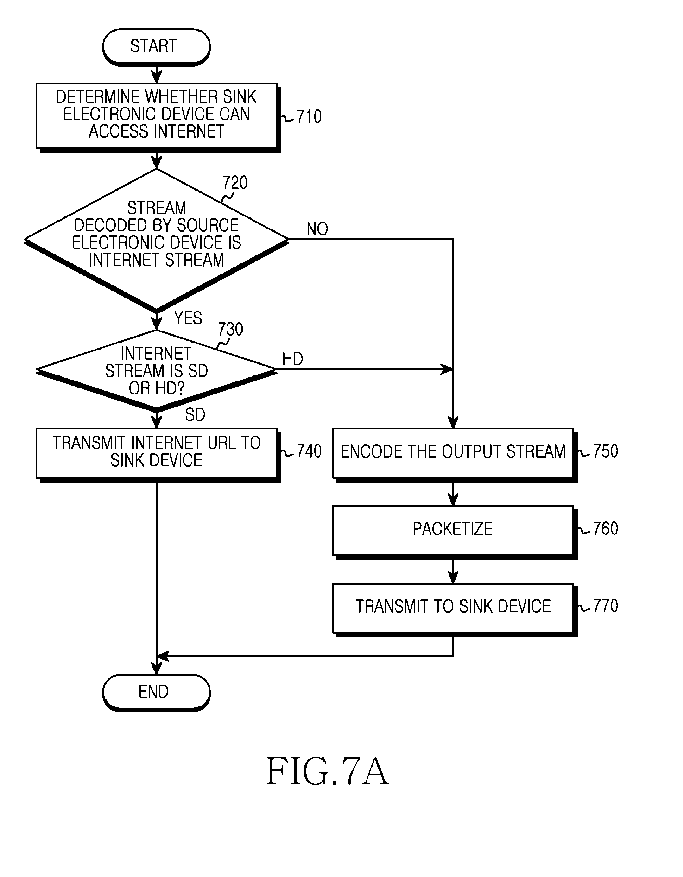

FIG. 7A is a flowchart of WFD communication session establishment for transmitting Internet accessible information from a source electronic device to a sink electronic device according to an exemplary embodiment of the present invention.

Referring to FIG. 7A, the source electronic device determines whether the sink electronic device may access the Internet in step 710. Determining whether the sink electronic device may access the Internet identifies the Internet accessible information transmitted by the sink electronic device.

Prior to this operation for determining whether the sink electronic device may access the Internet, the sink electronic device may transmit the Internet accessibility information to the source electronic device, which is not illustrated in the drawing. The Internet accessibility information may be carried by the control signal. Alternatively, the Internet accessibility information may be carried by the packet header. Alternatively, when the source electronic device and the sink electronic device arrange in advance, the Internet accessibility information may be included in a particular location of the packet payload.

Before the sink electronic device transmits the Internet accessibility information to the source electronic device, the source electronic device may send the request inquiring of the Internet accessibility of the sink electronic device, to the sink electronic device, which is not illustrated in the drawing.

This operation of the source electronic device and the sink electronic device may be performed in, for example, step 430 of FIG. 4 in which the WFD capability negotiation is performed.

In step 720, it is determined whether the signal output from the source electronic device is the Internet stream. Herein, it is determined whether the signal decoded by the source electronic device and output through the output device of the source electronic device is the Internet stream. The source electronic device receives the Internet stream by accessing the Internet, decodes and outputs the received Internet stream encoded. When the signal is received over the Internet and output, the source electronic device already knows that the output signal is the Internet stream. In addition, the Internet stream may be identified by determining whether the signal includes the Internet URL. The Internet URL may be placed in the packet header. Alternatively, the Internet URL may be placed in the packet payload. Alternatively, it is possible to determine whether the signal is a content received through the communication according to the IP.

When the signal output from the source electronic device is not the Internet stream, the source electronic device encodes the output signal in step 750, packetizes the signal in conformity with the communication standard of the source electronic device and the sink electronic device in step 760, and transmits the signal to the sink electronic device in step 770.

When the signal output from the source electronic device is determined to be the Internet stream in step 720, it is determined whether the Internet stream is High Definition (HD) or Standard Definition (SD)in step 730. When the source electronic device outputs the encoded Internet stream, re-encodes the output signal, and transmits the re-encoded signal to the sink device, the display quality of the video signal and/or the sound quality of the audio signal are degraded. In particular, as the re-encoding degrades the display quality and/or the sound quality of the SD Internet stream, the output from the sink electronic device is further deteriorated. Accordingly, the transmission is discriminated by determining whether the Internet stream is the HD or the SD.

For example, when the Internet stream output from the source electronic device is determined to be an HD stream in step 730, the source device encodes the output signal in step 750, packetizes the signal in conformity with the communication standard of the source electronic device and the sink electronic device in step 760, and transmits the signal to the sink electronic device in step 770.

When the Internet stream output from the source electronic device is determined to be an SD stream in step 730, the source electronic device transmits the Internet accessible information of the output Internet stream to the sink device which communicates with the source electronic device. In detail, the source device transmits the URL of the output Internet stream to the sink device in step 740. The Internet URL, which is the Internet accessible information, may be carried by the control signal to the sink electronic device.

According to exemplary embodiments of the present invention, instruction sets for the respective operations of FIG. 7A may be stored as one or more modules to the memory 210 of FIG. 2. In this case, the module stored to the memory 210 may be executed by one or more processors.

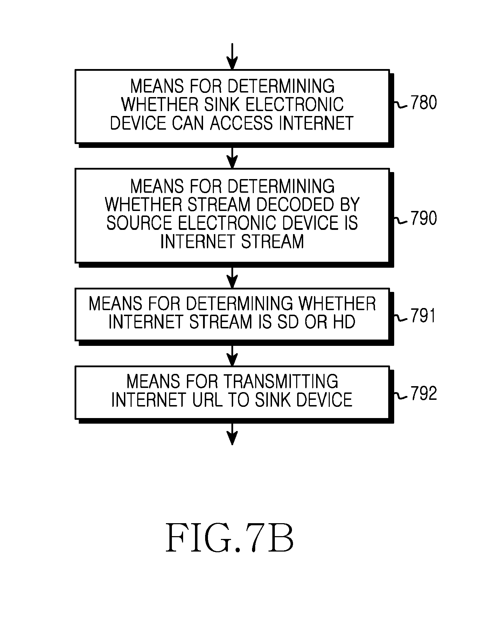

FIG. 7B is a block diagram of an apparatus, which corresponds to a method such as, for example, the method of the flowchart of FIG. 7A, for establishing a WFD communication session for transmitting Internet accessible information from a source electronic device to a sink electronic device according to an exemplary embodiment of the present invention.

Referring to FIG. 7B, the source electronic device includes a means 780 for determining whether the sink electronic device is accessible to the Internet. Determining whether the sink electronic device may access the Internet identifies the Internet accessible information transmitted by the sink electronic device.

The source electronic device may further include a means (not shown) for transmitting its Internet accessibility information to the sink electronic device.

The source electronic device may include a means (not shown) for sending the request inquiring of the Internet accessibility of the sink electronic device, to the sink electronic device.

Next, the source electronic device may include a means 790 for determining whether the signal output from the source electronic device is the Internet stream.

The source electronic device may include a means 791 for determining, when the signal output from the source electronic device is the Internet stream, whether the Internet stream is an HD stream or a SD stream. When the source electronic device outputs the encoded Internet stream, re-encodes the output signal, and transmits the re-encoded signal to the sink device, the display quality of the video signal and/or the sound quality of the audio signal are degraded. In particular, as the re-encoding degrades the display quality and/or the sound quality of the SD Internet stream, the output from the sink electronic device is further deteriorated. Accordingly, the transmission is discriminated by determining whether the Internet stream is the HD or the SD.

The source electronic device may include a means 792 for, when the Internet stream output from the source electronic device is the SD, transmitting the Internet accessible information of the Internet stream to the sink device which Wi-Fi communicates with the source electronic device. The means 792, particularly, transmits the Internet URL of the output Internet stream to the sink device. The URL, which is the Internet accessible information, may be carried by the control signal to the sink electronic device.

Such means may be implemented using separate or single hardware.

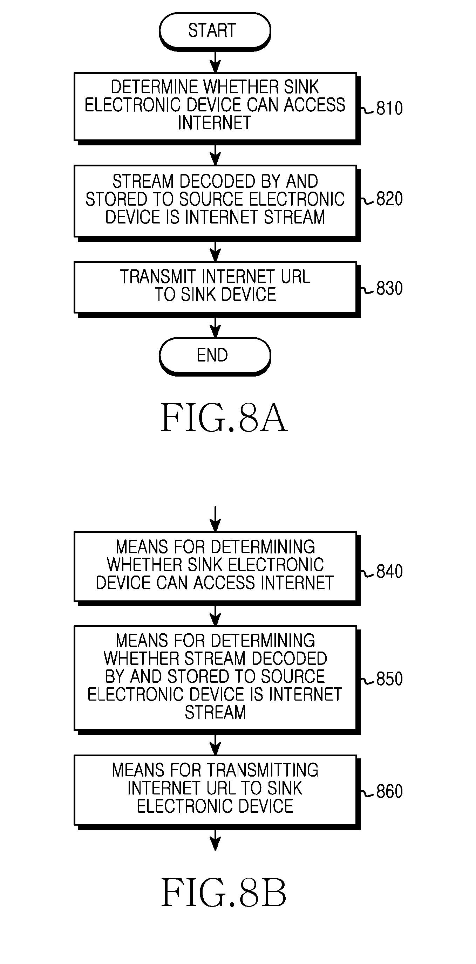

FIG. 8A is a flowchart of WFD communication session establishment for transmitting Internet accessible information from a source electronic device to a sink electronic device according to an exemplary embodiment of the present invention.

Referring to FIG. 8A, the source electronic device determines whether the sink electronic device may access the Internet in step 810. Determining whether the sink electronic device may access the Internet identifies the Internet accessibility information transmitted by the sink electronic device.

Prior to the determining operation in step 810, the sink electronic device may transmit the Internet accessibility information to the source electronic device, which is not illustrated in the drawing. The Internet accessibility information may be carried by the control signal. Alternatively, the Internet accessibility information may be carried by the packet header. Alternatively, when the source electronic device and the sink electronic device arrange in advance, the Internet accessibility information may be included in a particular location of the packet payload.

Before the sink electronic device transmits the Internet accessibility information to the source electronic device, the source electronic device may send the request inquiring of the Internet accessibility of the sink electronic device, to the sink electronic device, which is not illustrated in the drawing.

This operation of the source electronic device and the sink electronic device may be fulfilled in, for example, step 430 of FIG. 4 in which the WFD capability negotiation is performed.

In step 820, it is determined whether the signal decoded, output, and stored by the source electronic device is the Internet stream. Herein, this operation determines whether the stored encoded signal decoded by the source electronic device and output through the output device of the source electronic device is the Internet stream. The Internet stream may be identified by determining whether the signal includes the Internet URL. The Internet URL may be placed in the packet header of the signal. Alternatively, the Internet URL may be placed in the packet payload. Alternatively, it is possible to determine whether the signal is a content received through the communication according to the IP.

When the signal output from the source electronic device is the Internet stream, the source electronic device transmits the Internet accessible information of the output Internet stream to the sink device which communicates with the source electronic device. In detail, the source device transmits the URL of the output Internet stream to the sink device in step 830. The URL, which is the Internet accessible information, may be carried by the control signal to the sink electronic device.

According to exemplary embodiments of the present invention, instruction sets for the respective operations of FIG. 8A may be stored as one or more modules to the memory 210 of FIG. 2. In this case, the module stored to the memory 210 may be executed by one or more processors.

FIG. 8B is a block diagram of an apparatus, which corresponds to a method such as, for example, the method of the flowchart of FIG. 8A, for establishing a WFD communication session establishment for transmitting Internet accessible information from a source electronic device to a sink electronic device according to an exemplary embodiment of the present invention.

Referring to FIG. 8B, the source electronic device may include a means 840 for determining whether the sink electronic device is accessible to the Internet. Next, the source electronic device may include a means 850 for determining whether the signal output from the output device of the source electronic device by decoding the encoded stream stored to the source electronic device is the Internet stream. In addition, the source electronic device may include a means (not shown) for sending the request inquiring of the Internet accessibility of the sink electronic device, to the sink electronic device. The source electronic device may include a means (not shown) for receiving the information of the Internet accessibility from the sink electronic device. The Internet accessibility information may be delivered by the control signal. Alternatively, the Internet accessibility information may be carried by the packet header. Alternatively, when the source electronic device and the sink electronic device arrange in advance, the Internet accessibility information may be included in a particular location of the packet payload.

Next, when the signal output from the source electronic device is the Internet stream, the source electronic device may include a means 860 for transmitting the Internet accessible information of the output Internet stream to the sink device which Wi-Fi communicates with the source electronic device. In particular, the Internet URL of the output Internet stream may be transmitted to the sink device. The URL, which is the Internet accessible information, may be carried by the control signal to the sink electronic device.

Such means may be implemented using separate or single hardware.

The exemplary embodiments and various functional operations of the present invention described herein may be implemented in computer hardware, firmware, software, or in combinations of one or more of them including the structures disclosed in this specification and their structural equivalents. The exemplary embodiments of the present invention may be implemented as one or more modules of computer program instructions executed by one or more computer program products, that is, a data processor or encoded on a computer-readable medium to control the data processor.

The computer-readable medium may be a non-transient machine-readable storage medium, a machine-readable storage substrate, a memory device, a material affecting a machine-readable propagated signal, or a combination of one or more of them. The term 'data processor' encompasses every device, apparatus, and machine including, for example, a programmable processor, a computer, a multiple processors, or a computer, for processing data. The device may be added to the hardware and include a code for creating an execution environment of a corresponding computer program, for example, a code for constituting processor firmware, a protocol stack, a database management system, an operating system, or a combination of one or more of them.

The propagated signal is an artificially generated signal, for example, a machine-generated electrical, optical, or electromagnetic signal which is generated to encode information for transmission to a suitable receiver. A computer program (which is also referred to as a program, software, software application, script, or code) may be written in any form of a programming language including compiled or interpreted languages, and may be deployed in any form including a stand-alone program or a module, component, subroutine, or other unit suitable for use in a computing environment. A computer program may not need to correspond to a file of a file system. A program may be stored in a portion of a file which holds other programs or data (e.g., one or more scripts stored in a markup language document), in a single file dedicated to the corresponding program, or in multiple coordinated files (e.g., one or more modules, sub-programs, or part of code).

A computer program may be deployed to be executed on one computer or on multiple computers which are located at one site or distributed across multiple sites and interconnected by a communication network. The processes and logic flows described in this specification may be performed by one or more programmable processors executing one or more computer programs to perform functions by operating on input data and generating the output. The processes and logic flows may also be performed by, and the apparatus may also be implemented as, special purpose logic circuitry such as, for example, a Field Programmable Gate Array (FPGA) or an Application Specific Integrated Circuit (ASIC).

Although this specification includes many specific details, these should not be construed as limitations on the scope of any inventions or of what may be claimed, but rather as descriptions of features specific to particular embodiments of particular inventions. Certain features which are described in this specification in the context of separate embodiments can also be implemented in combination in a single embodiment. Conversely, various features described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination. Similarly, although operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the exemplary embodiments of the present invention described above should not be understood as requiring such separation in all exemplary embodiments of the present invention, and it should be understood that the described program components and systems can generally be integrated together in a single software product or packaged into multiple software products.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A method for transmitting a stream in a first electronic device, the method comprising:
determining whether a stream output from the first electronic device is an Internet stream; and
transmitting Internet accessible information of the Internet stream to a second electronic device which communicates with the first electronic device with a short range communication scheme,
wherein the determining whether a stream output from the first electronic device is an Internet stream includes determining whether the stream decoded by the first electronic device and output through an output device of the first electronic device is the Internet stream.

2. The method of claim 1, further comprising:
before determining whether the stream output from the first electronic device is the Internet stream, determining whether the second electronic device is accessible to Internet.

3. The method of claim 1, further comprising:
after determining whether the stream output from the first electronic device is the Internet stream, determining whether the second electronic device is accessible to Internet.

4. The method of claim 1, wherein the Internet accessible information is Internet Uniform Resource Locator (URL).

5. The method of claim 1, wherein the Internet accessible information is carried by a control signal to the second electronic device.

6. The method of claim 1, wherein the Internet stream output from the first electronic device is an Internet stream received at the first electronic device by accessing the Internet, or an Internet stream stored.

7. The method of claim 1, wherein the short range communication scheme is Wi-Fi communication.

8. A first electronic device comprising:
one or more processors;
a memory; and
one or more modules stored to the memory to be executed by the one or more processors,
wherein the one or more processors are arranged to determine whether a stream output from the first electronic device is an Internet stream; and to transmit Internet accessible information of the Internet stream to a second electronic device which communicates with the first electronic device with a short range communication scheme,
wherein the determining whether a stream output from the first electronic device is an Internet stream includes determining whether the stream decoded by the first electronic device and output through an output device of the first electronic device is the Internet stream.

9. The first electronic device of claim 8, wherein the one or more processors are further arranged to:
, before determining whether the stream output from the first electronic device is the Internet stream, determine whether the second electronic device is accessible to Internet.

10. The first electronic device of claim 8, wherein the one or more processors are further arranged to:
, after determining whether the stream output from the first electronic device is the Internet stream, determine whether the second electronic device is accessible to Internet.

11. The first electronic device of claim 8, wherein the Internet accessible information is Internet Uniform Resource Locator (URL).

12. The first electronic device of claim 8, wherein the Internet accessible information is carried by a control signal to the second electronic device.

13. The first electronic device of claim 8, wherein the Internet stream output from the first electronic device is an Internet stream received at the first electronic device by accessing the Internet, or an Internet stream stored.

14. The first electronic device of claim 8, wherein the short range communication scheme is Wi-Fi communication.

15. A computer-readable storage medium storing one or more programs which comprise instructions which, when executed by an electronic device, cause the device to execute the method described in any of the claims 1-7.
